# EUROPÄISCHE PATENTANMELDUNG

(11) **EP 3 534 229 A1**
(43) Veröffentlichungstag der Anmeldung: **04.09.2019**
(21) Anmeldenummer: 18159105.8
(22) Anmeldetag: 28.02.2018
(51) Int. Cl.: G05B 19/414, G05B 19/19

(54) **BESTIMMEN VON PARAMETERN EINER LAGEREGELUNG FÜR EINEN SERVO-ANTRIEB**

(71) Anmelder: Siemens Aktiengesellschaft, 80333 München (DE)
(72) Erfinder: Kram, Raimund, 91056 Erlangen (DE); Popp, Manfred, 90513 Zirndorf (DE); Wedel, Bernd, 91096 Möhrendorf (DE); Wiegärtner, Georg, 91278 Pottenstein (DE)

(57) **Zusammenfassung**

Die Erfindung betrifft ein Verfahren zum Bestimmen von Parametern (101, 102) einer Lageregelung (110) für einen Servo-Antrieb, wobei die Lageregelung (110) in einer Servo-Antriebssteuerung (100) ausgeführt wird, wobei das Bestimmen der Parameter (101, 102) in Abhängigkeit von Antriebsgrößen durch die Servo-Antriebssteuerung (100) durchgeführt wird.

## Beschreibung

Die Erfindung betrifft ein Verfahren zum Bestimmen von Parametern einer Lageregelung für einen Servo-Antrieb sowie eine antriebsintegrierte Steuerung eines Servo-Antriebs.

Für zahlreiche Anwendungen im industrieellen Umfeld, bei denen eine Produktions- oder Fertigungsmaschine oder Werkzeugmaschine einen Bewegungsablauf durchfährt, ist in der Steuerung eine Lageregelung vorzusehen. Diese Lageregelung ermöglicht ein Regeln einer Bewegung entlang vorgegebenen Bahnen oder Bewegungsprofilen. Beispielsweise wird für eine Achse ein Bewegungsablauf vorgegeben, welcher anhand einer Lageregelung möglichst präzise abzufahren ist. Beispielsweise erfolgt die Achsbewegung bei numerisch gesteuerten Maschinen mittels Lageregelung.

In einigen Anwendungen ist der Lageregler statt in einer übergeordneten Steuerung in dem Antrieb selbst ausgeführt. Beispielsweise ist dies bei sogenannter PROFIdrive-DSC-Funktionalität der Fall.

Für die korrekte Funktionsweise eines Lagereglers, welcher in einem Servo-Antrieb vorgesehen ist, ist es notwendig, Parameter des Lagereglers passend einzustellen. Beispielsweise müssen Parameter wie Lageregler-Verstärkung oder DrehzahlreglerErsatzzeit an eine Maschine oder Anlage angepasst eingestellt werden.

Gängige Lösungen sehen vor, dass solche Lageregelungsparameter in eigenen Optimierungstools ermittelt werden. Dafür kommen beispielsweise Engineering-Tools oder Optimierungstools einer übergeordneten Steuerung in Frage. Eine solche Bestimmung von Parametern einer Lageregelung ist bei bekannten Lösungen separat anzustoßen. Dafür muss eine Verbindung zu einer übergeordneten Steuerung vorliegen und die Ermittlung der Parameter durch einen Optimierungsvorgang in der übergeordneten Steuerung angestoßen werden.

Vor diesem Hintergrund besteht die Aufgabe der vorliegenden Erfindung darin, ein verbessertes Verfahren zum Bestimmen von Parametern einer Lageregelung in einem Servo-Antrieb sowie eine antriebsintegrierte Steuerung eines Servo-Antriebs hierfür bereitzustellen. Diese Aufgabe wird durch die Merkmale der unabhängigen Ansprüche gelöst. Vorteilhafte Ausgestaltungen sind in den abhängigen Ansprüchen angegeben.

Die Erfindung betrifft ein Verfahren zum Bestimmen von Parametern einer Lageregelung für einen Servo-Antrieb, wobei die Lageregelung in einer Servo-Antriebssteuerung ausgeführt wird, wobei das Bestimmen der Parameter in Abhängigkeit von Antriebsgrößen durch die Servo-Antriebssteuerung durchgeführt wird.

Als Parameter einer Lageregelung für einen Servo-Antrieb sind beispielsweise die Parameter Lagereglerverstärkungsfaktor und Drehzahlreglerersatzzeit zu bestimmen. Die Parameter einer Lageregelung für einen Servo-Antrieb sind zur Optimierung des Lagereglers dem Lageregler selbst vorzugeben. Ohne die Vorgabe oder die Kenntnis über geeignete Parameter ist der Lageregler für einen Servo-Antrieb nicht geeignet, eine Regelung optimiert durchzuführen. Ein Lageregler, welcher optimiert eingestellt ist, wirkt in der Regel mit einem Drehzahlregler zusammen, welcher letztlich für die Vorgabe einer Drehzahl für einen Umrichter vorgesehen ist. Das Bestimmen von Parametern umfasst auch das Bestimmen eines einzigen Parameters, insbesondere in einem Optimierungsvorgang.

Für das Optimieren des Lagereglers sind auch Antriebsgrößen zu berücksichtigen, damit das Zusammenwirken von Lageregler und Drehzahlregler bzw. Stromregler aufeinander ausgerichtet erfolgt. Unter Antriebsgrößen sind Eigenschaften oder Einstellungen des Antriebs zu verstehen. Es handelt sich insbesondere um dynamische Antriebsgrößen.

Bislang wurde das Bestimmen der passenden Parameter der Lageregelung durch eine übergeordnete Steuerung angestoßen. Wenngleich eine Lageregelung bereits im Servo-Antrieb ausgeführt war, wurde dennoch bisher die Regleroptimierung durch ein separates Tool in der übergeordneten Steuerung angestoßen. Erfindungsgemäß wird das Bestimmen der Parameter durch die Servo-Antriebssteuerung selbst durchgeführt. Ein Antrieb oder Umrichter hat demnach ausreichend Rechenleistung, nicht nur den Lageregler bereits in der Regelstrecke des Umrichters zu berücksichtigen, sondern darüber hinaus auch die Lageregleroptimierung vorzunehmen.

Der Begriff Parameter einer Lageregelung ist eng mit dem Begriff der Einstellung einer Lageregelung verwoben. Beispielsweise kann eine Einstellung des Lagereglers, in welcher der Betrieb des Lagereglers optimal ist, entsprechende optimale Parameter festlegen.

Eine Ausführung eines Servo-Antriebs, bei welchem der Lageregler gemeinsam mit dem Drehzahlregler im Antrieb oder im Umrichter ausgeführt wird, ist Ausgangsbasis für den Einsatz des erfindungsgemäßen Verfahrens. Beispielsweise wird eine antriebsinterne Optimierung, welche zur Einstellung unter anderem des Drehzahlreglers dient, erweitert um die Durchführung der Lageregleroptimierung, d. h. das Bestimmen der Parameter der Lageregelung.

Die Regleroptimierung des Reglers insgesamt, wobei insbesondere Lageregler und Drehzahlregler im Umrichter zusammenwirken, kann somit komplett im Antrieb oder Umrichter erfolgen. Eine spezifische Aktivierung beispielsweise in einem Engineering-Tool oder in einer übergeordneten Steuerung entfällt somit auf vorteilhafte Weise. Die Optimierungsparameter werden von der Strecke oder von der Achse oder Einstellungen des Antriebs oder Umrichters beeinflusst und sind somit bei der Optimierungsfunktionalität des Antriebs oder Umrichters vollständig bestimmbar.

Zugrundezulegen sind in der Architektur des Umrichters mit der übergeordneten Steuerung beispielsweise Telegramme wie das PROFIdrive DSC-Telegramm. Mittels dieser Telegramme wird die Kommunikation der ermittelten Parameter zwischen einer übergeordneten Steuerung und dem Umrichter erreicht.

Eine manuelle Optimierung durch einen Inbetriebnehmer eines Servo-Antriebs entfällt in einer vorteilhaften Variante vollständig. Eine spezifische Anforderung zur Ermittlung der DSC-Lageregelungsparameter auf manuelle Weise entfällt ebenfalls in einer besonders vorteilhaften Ausgestaltung und ist insbesondere bereits Inhalt der Optimierungsfunktionalität des Antriebs.

Gemäß einer Ausgestaltung werden als Parameter ein Geschwindigkeitsverstärkungsfaktor und/oder eine Drehzahlreglerersatzzeit oder Symmetrierzeit bestimmt. Dabei handelt es sich um besonders wichtige Parameter einer Lageregelung eines Servo-Antriebs. Das Bestimmen eines optimierten Geschwindigkeitsverstärkungsfaktors oder einer optimierten Drehzahlreglerersatzzeit oder einer optimierten Symmetrierzeit wird auf vorteilhafte Weise durch die Servo-Antriebssteuerung ausgelöst und durchgeführt zur Optimierung der Reglerstrecke, welche den Lageregler sowie den Drehzahlregler umfasst.

Gemäß einer Ausgestaltung gehen als Antriebsgrößen eine Gesamtträgheit oder eine Abtastzeit oder Taktzeit oder eine Regler- oder Filtereinstellung einer Drehzahl- oder Stromregelung, oder Trägheitsmomente oder Antriebskenngrößen oder Ablaufeigenschaften in das Bestimmen der Parameter ein. Diese Antriebsgrößen beeinflussen die Regelstrecke und somit die Wahl zumindest eines optimalen Parameters der Lageregelung. Auf vorteilhafte Weise wird so die Verfügbarkeit der die Regelstrecke der Lageregelung beeinflussenden Größen im Antrieb genutzt zur Einrichtung oder Einstellung des Lagereglers.

Gemäß einer Ausgestaltung wird das Bestimmen bei einer antriebsinternen Optimierung von Antriebsparametern durchgeführt. Somit erfolgt ein Mitoptimieren des Lagereglers mit weiteren Antriebsparametern. Das Durchführen bei einer antriebsinternen Optimierung ist auch als Durchführen während einer solchen Optimierung zu verstehen, insbesondere veranlasst die antriebsinterne Optimierung zugleich die Lageregleroptimierung und führt beide Optimierungen aus. Antriebsparameter sind beispielsweise Parameter wie ein Geschwindigkeitsverstärkungsfaktor des unterlagerten Strom- oder Momentenregelkreises oder Filterparameter.

Gemäß einer Ausgestaltung wird das Bestimmen bei der antriebsinternen Optimierung automatisch durchgeführt. Ein manuelles Auslösen entfällt somit auf vorteilhafte Weise.

Gemäß einer Ausgestaltung wird das Bestimmen bei der antriebsinternen Optimierung ohne eine Aktivierung durch eine übergeordnete Steuerung durchgeführt. Insbesondere muss kein Optimierungs-Tool, welches auf einer übergeordneten Steuerung vorgesehen ist die Funktionalität der Lageregleroptimierung aufweisen.

Gemäß einer Ausgestaltung sind die bestimmten Parameter in Antriebsdaten umfasst und für ein übergeordnetes Steuerungssystem oder ein Engineeringsystem auslesbar. Auf diese Weise können die fertig bestimmten oder als optimiert abgelegten oder angezeigten Parameter durch eine übergeordnete Steuerung genutzt werden und als optimierte Lagereglerparameter dem Lageregler bzw. dem gesamten Umrichter umfassend den Lageregler und den Drehzahlregler vorgegeben werden. Insbesondere gehen die Parameter nicht ausnahmslos im Antrieb selbst in den Regelkreis ein und können beispielsweise in einer übergeordneten Steuerung bereits in die Regelstrecke einfließen. Ebenso ist es möglich, dass die optimierten Parameter im Umrichter in die Regelstrecke eingehen.

Gemäß einer Ausgestaltung werden die bestimmten Parameter von einem übergeordneten Steuerungssystem oder einem Engingeeringsystem ausgelesen.

Auf vorteilhafte Weise zeigt der Antrieb die ermittelten und optimierten Parameter zur Auswahl an und eine übergeordnete Steuerung übernimmt die Werte entsprechend der Auswahl des Antriebs. Beispielsweise erfolgt das Zurückübermitteln an den Antrieb im Rahmen von PROFIdrive-Telegrammen.

Gemäß einer Ausgestaltung erfolgt das Bestimmen unabhängig von einer Kommunikationsverbindung oder dem Bestehen einer Kommunikationsverbindung zwischen dem Servo-Antrieb und einem übergeordneten Steuerungssystem oder Engineeringsystem. Insbesondere wenn noch keine Verbindung zu einer übergeordneten Steuerung vorliegt, beispielsweise während einer Inbetriebnahmephase, erfolgt die Lageregleroptimierung dennoch auf vorteilhafte Weise. Insbesondere aufgrund der Einflussfaktoren und deren Vorliegen antriebsseitig ist das vorgeschlagene Vorgehen effizient in einem Inbetriebnahmeprozess durchführbar und ein Vorliegen von optimierten Lagereglerparametern bereits vor Bestehen einer etablierten Verbindung zu einer übergeordneten Steuerung gewährleistet.

Gemäß einer Ausgestaltung werden die Parameter in Abhängigkeit von Werten eines Motorgebers bestimmt. Standardmäßig werden für die Regleroptimierung die Werte eines Motorgebers verwendet. Gemäß einer Ausgestaltung werden die Parameter in Abhängigkeit von Werten eines Maschinengebers, d.h. eines direkten Gebers, verwendet werden.

Die Erfindung betrifft ferner eine antriebsintegrierte Steuerung eines Servo-Antriebs, aufweisend eine Lagereglung für den Servo-Antrieb sowie aufweisend eine Optimierungseinheit, wobei die Optimierungseinheit zum Bestimmen von Parametern der Lageregelung in Abhängigkeit von Antriebsgrößen ausgebildet ist. Die Optimierungseinheit, welche in der antriebsintegrierten Steuerung vorgesehen ist, ermöglicht eine automatische und effiziente Mitoptimierung der Lagereglerparameter mit Optimierungsfunktionalitäten des Antriebs.

Gemäß einer Ausgestaltung weist die antriebsintegrierte Steuerung ferner eine Ausgabeeinheit zur Ausgabe eines Statusparameters auf, wobei der Statusparameter zum Anzeigen eines erforderlichen erneuten Bestimmens zumindest eines Parameters oder zum Anzeigen zumindest eines ermittelten und/ oder gültigen Parameters ausgebildet ist. Somit kann eine Statusmeldung realisiert werden, welche den Bedarf einer erneuten oder weiteren Reglerparameteroptimierung anzeigt. Beispielsweise kann die Anzeige angeben, ob Reglerdaten gültig oder konsistent sind. Eine erforderliche erneute Optimierung kann neben einer fehlgeschlagenen Optimierung auch wegen einer nachträglichen Änderung von Reglerparametern nötig sein.

Gemäß einer Weiterbildung weist die antriebsintegrierte Steuerung ferner eine Kommunikationsschnittstelle zu einem übergeordneten Steuerungssystem oder einem Engineeringsystem auf. Insbesondere wird die Kommunikationsschnittstelle für den laufenden Betrieb vorgesehen sein, in welchem eine Kommunikationsverbindung zu einer übergeordneten Steuerung besteht. In Inbetriebnahmephasen ist die Ausbildung einer solchen Kommunikationsverbindung für die Reglerparameteroptimierung noch nicht zwingend.

Die Erfindung wird nachfolgend anhand von Ausführungsbeispielen mithilfe deren näher erläutert.

Es zeigen:
- FIG 1: eine schematische Darstellung eines Servo-Antriebs mit übergeordneter Steuerung gemäß einem ersten Ausführungsbeispiel der Erfindung;
- FIG 2: eine schematische Darstellung eines Regelkreises zur Antriebsregelung eines Servo-Antriebs;
- FIG 3: ein Ablaufdiagramm zur schematischen Darstellung der Übertragung von Lagereglerparametern per Telegramm gemäß einem zweiten Ausführungsbeispiel der Erfindung.

In den Figuren sind funktionsgleiche Elemente mit denselben Bezugszeichen versehen, sofern nichts anderes angegeben ist.

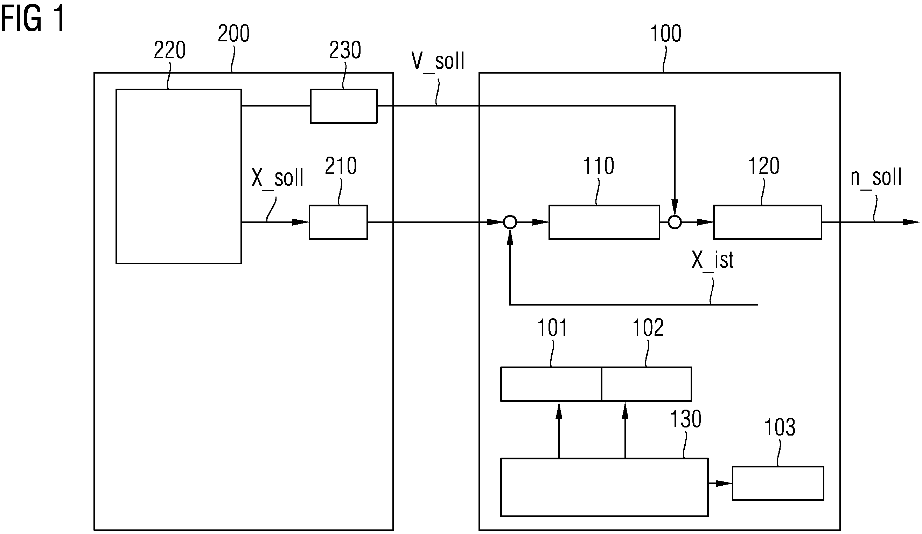

In Figur 1 ist eine Servo-Antriebssteuerung 100 eines Servo-Antriebs als Komponente abgebildet. Sie weist einen Drehzahlregler 120 auf sowie einen Lageregler 110. Der Drehzahlregler 120 ist zur Ausgabe eines Momentensollwertes n_soll vorgesehen, welches an einen Motor vorgegeben wird (nicht abgebildet). Unter Berücksichtigung eines Gesamtträgheitsmomentes wird daraus ein vorzugebender Stromsollwert generiert. Der Servo-Antrieb weist neben der Umrichterfunktionalität auch die Antriebs-Steuerungsfunktionalität auf. Die Servo-Antriebssteuerung 100 weist gemäß einem Ausführungsbeispiel der Erfindung die Funktion einer elektronischen Lageregelung auf. Dazu ist ein integrierter Lageregler 110 im Servo-Antrieb vorgesehen. Der sogenannte Dynamic Servo-Control oder kurz DSC-Lageregler ist somit bereits antriebsintegriert vorgesehen.

In der übergeordneten Steuerung 200 ist ein Interpolator 220 zur Umsetzung einer Bewegungsführung vorgesehen. Beispielsweise soll ein Bewegungsprofil durchlaufen werden, welches die entsprechende Ansteuerung der Motoren der an der Bewegung beteiligten Achsen benötigt. Dazu werden Geschwindigkeits- und Positionssollwerte vorgegeben, welche es durch den Servo-Antrieb im Zusammenwirken mit der übergeordneten Steuerung 200 zu regeln gilt.

Beispielshaft werden als Geräteprofile für die Antriebsgeräte PROFIdrive-Profile zugrundegelegt. PROFIdrive ist von der Nutzerorganisation PROFIbus und PROFInet International (PI) spezifiziert und durch die Norm IEC 61800.7 als zukunftssicherer Standard festgeschrieben. Die entsprechend festgelegten Geräteprofile und insbesondere Schnittstellen ermöglichen einen Austausch von PROFIdrive-Telegrammen über PROFIbus oder PROFInet. Durch die Nutzung des PROFIdrive-Profils ist eine interoperable Schnittstelle auf der Applikationsebene verfügbar.

In Figur 1 ist schematisch der Regelkreis angedeutet, welcher sich von der Implementierungssicht her auf die Servo-Antriebssteuerung 100 und die übergeordnete Steuerung 200 verteilt. Durch den Interpolator 220 wird ein Geschwindigkeitssollwert v_soll an eine Geschwindigkeitsvorsteuerung 230 vorgegeben. Die Vorsteuerung der Geschwindigkeit entsprechend dem Bewegungsverlauf dient der direkten Aufschaltung des diesbezüglichen Stellwertanteils. Ebenfalls durch den Interpolator 220 wird ein Positionssollwert x_soll vorgegeben und einem Symmetrierfilter 210 zugeführt. Dieses dient der Berücksichtigung des Systemverhaltens in Folge der aktiven Geschwindigkeitsvorsteuerung und beeinflusst entsprechend den dem Lageregler vorzugebenden Positionswert. Dem Lageregler 110 wird die im Antrieb gebildete Positionsregeldifferenz aus dem Positionssollwert und dem im Antrieb ermittelten Positionsistwert x_ist zugeführt.

Dem Drehzahlregelkreis wird die Solldrehzahl aus der über die Geschwindigkeitsvorsteuerung direkt vorgegebenen Sollgeschwindigkeit und einem durch den Lageregler auszugleichenden Positionsfehler vorgegeben.

Im Servo-Antrieb ist eine Optimierungseinheit 130 vorgesehen. Die Optimierungseinheit 130 kann auch als Optimierungsfunktionalitätsbaustein der Servo-Antriebssteuerung 100 bezeichnet werden und ist neben der Ermittlung optimierter Antriebsparameter zugleich zur Bestimmung von Parametern des Lagereglers vorgesehen. Im vorliegenden Beispiel ermittelt die Optimierungseinheit eine Drehzahlreglerersatzzeit 101 sowie einen Lagereglerverstärkungsfaktor 102. Beide Parameter dienen zur optimierten Einstellung des Lagereglers im Antrieb.

Die Optimierungseinheit 130 stößt die Ermittlung an, unabhängig von der übergeordneten Steuerung 200. Es ist zum Zeitpunkt des Optimierungsvorganges in der Optimierungseinheit 130 keine existierende Kommunikationsverbindung mit der übergeordneten Steuerung 200 und auch kein Input von dieser nötig. Die Parameterbestimmung und damit die Bestimmung optimierter Einstellwerte des Lagereglers 110 erfolgt quasi autonom im Servo-Antrieb. Die Einstellungen des DSC-Lagereglers werden somit bei der Antriebsoptimierung, welche ebenfalls durch die Optimierungseinheit 130 durchgeführt wird, implizit mit ermittelt und können direkt oder später an einem Engineering-Tool oder der übergeordneten Steuerung 200 ausgelesen und ggf. übernommen werden. Die Optimierungseinheit 130 ermittelt zur Antriebsoptimierung Antriebsparameter 103. Somit erfolgt die Regleroptimierung komplett im Antrieb. Eine spezifische Aktivierung von außerhalb des Servo-Antriebs 100 entfällt. Eine vorhandene Optimierungsfunktionalität im Servo-Antrieb 100 wird somit für die gesamte Antriebsregelung effizienter genutzt.

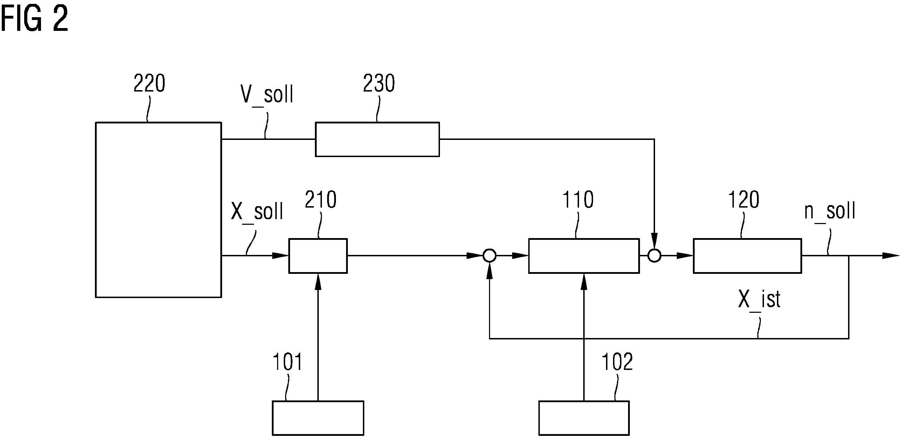

In Figur 2 ist die dem ersten Ausführungsbeispiel zugrundeliegende Regelstrecke skizziert. Die beiden Lagereglerparameter Drehzahlreglerersatzzeit 101 sowie Lagereglerverstärkungsfaktor 102 sind schematisch dargestellt. Die Abbildung soll verdeutlichen, wie diese beiden Parameter zur Auslegung der im gesamten Regelkreis beteiligten Reglerkomponenten dienen. Für die Vorgabe eines optimierten Lagereglerverstärkungsfaktors 102 wird dieser dem Lageregler 110 in der Servo-Antriebssteuerung 100 zur Parametrierung vorgegeben. Dem Symmetrierfilter 210 wird eine als optimiert ermittelte Drehzahlreglerersatzzeit 101 auf Seiten der übergeordneten Steuerung 200 vorgegeben. Somit ist der Symmetrierfilter 210 in der Lage, den Lagesollwert um die Drehzahlreglerersatzzeit 101 und ggf. um weitere Kommunikationszeiten im Regelkreis zu verzögern.

Anhand von Figur 2 ist gut erkennbar, dass das Einfließen der bestimmten Parameter unabhängig von der Bestimmung der selbigen ist. Unabhängig von der Verwendung der bestimmten Parameter ist es vorteilhaft, die Optimierung im Antrieb automatisch anzustoßen und durchzuführen.

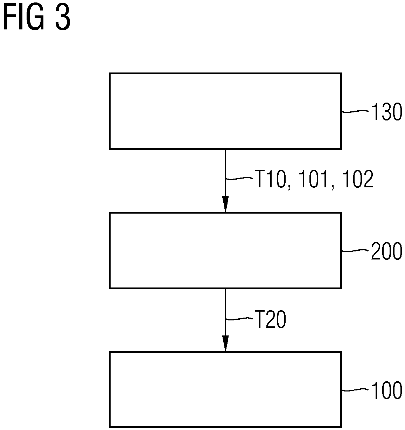

Anhand von Figur 3 wird ein zweites Ausführungsbeispiel der Erfindung veranschaulicht, bei dem durch eine Optimierungseinheit 130 die Parameter des Lagereglers 101 und 102 bestimmt werden. Die Werte werden antriebsseitig ermittelt. Wenn sie im Antrieb vorliegen, wird dies beispielsweise durch ein Statusbite angezeigt. Eine übergeordnete Steuerung kann die Parameter auslesen, indem die Parameter in einem Datenaustauschverfahren, insbesondere in einem azyklischen Datenaustausch 10, übermittelt werden. Die Übermittlung erfolgt an die übergeordnete Steuerung 200, welche die Parameter übernimmt und für den gesamten Regelkreis vorgibt.

Eine Rückübermittlung eines oder mehrerer der bestimmten Parameter von der übergeordneten Steuerung 200 an die Servo-Antriebssteuerung 100 erfolgt beispielsweise über ein Telegramm T20 in einer dem Antriebssystem zugrundeliegenden PROFIdrive-Struktur, beispielsweise über PROFIbus oder PROFInet. Die in einer Systemarchitektur entsprechend PROFIdrive-Profilen vorgesehenen und standardisierten Telegramme T20 können vorteilhaft für die zyklische Vorgabe der bestimmten und optimierten Parameter des Lagereglers im Arbeitsbetrieb, beispielsweise im operativen Betrieb oder im Bewegungsausführungsbetrieb, genutzt werden.

Das beschriebene Verfahren sowie die beschriebene Vorrichtung sind vorteilhaft für Servo-Antriebe und die dazugehörige Antriebsregelung in zahlreichen Anwendungen einsetzbar. Insbesondere ist die Erfindung vorteilhaft bei Anwendungen mit Gleichlauf mehrerer Achsen einsetzbar oder bei Antrieben im Einsatz für Handlingsaufgaben und allgemein für positionsrelevante Antriebslösungen.

Die Erfindung ist somit in unterschiedlichsten Branchen und in unterschiedlichsten Anlagen wie beispielsweise Verpackungsanlagen oder in verarbeitenden Maschinen mit entsprechenden Positionierfunktionalitäten und einer entsprechenden Bearbeitungsfunktionalität einsetzbar.

Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Bestimmen von Parametern (101, 102) einer Lageregelung (110) für einen Servo-Antrieb, wobei die Lageregelung (110) in einer Servo-Antriebssteuerung (100) ausgeführt wird, wobei das Bestimmen der Parameter (101, 102) in Abhängigkeit von Antriebsgrößen durch die Servo-Antriebssteuerung (100) durchgeführt wird.

2. Verfahren nach Anspruch 1, wobei als Parameter (101, 102) ein Geschwindigkeitsverstärkungsfaktor und/ oder eine Drehzahlreglerersatzzeit oder Symmetrierzeit bestimmt werden.

3. Verfahren nach Anspruch 1 oder 2, wobei als Antriebsgrößen eine Gesamtträgheit oder eine Abtastzeit oder Taktzeit oder eine Regler- oder Filtereinstellung einer Drehzahl- oder Stromregelung, oder Trägheitsmomente oder Antriebskenngrößen oder Ablaufeigenschaften in das Bestimmen der Parameter (101, 102) eingehen.

4. Verfahren nach einem der vorstehenden Ansprüche, wobei das Bestimmen bei einer antriebsinternen Optimierung von Antriebsparametern (103) durchgeführt wird.

5. Verfahren nach Anspruch 4, wobei das Bestimmen bei der antriebsinternen Optimierung automatisch durchgeführt wird.

6. Verfahren nach Anspruch 4 oder 5, wobei das Bestimmen bei der antriebsinternen Optimierung ohne eine Aktivierung durch eine übergeordnete Steuerung (200) durchgeführt wird.

7. Verfahren nach einem der vorstehenden Ansprüche, wobei die bestimmten Parameter (101, 102) in Antriebsdaten umfasst sind und für ein übergeordnetes Steuerungssystem (200) oder ein Engineering-System auslesbar sind.

8. Verfahren nach einem der vorstehenden Ansprüche, wobei die bestimmten Parameter (101, 102) von einem übergeordneten Steuerungssystem (200) oder einem Engineering-System ausgelesen werden.

9. Verfahren nach einem der vorstehenden Ansprüche, wobei das Bestimmen unabhängig von einer Kommunikationsverbindung oder dem Bestehen einer Kommunikationsverbindung zwischen dem Servo-Antrieb und einem übergeordneten Steuerungssystem (200) oder einem Engineering-System erfolgt.

10. Verfahren nach einem der vorstehenden Ansprüche, wobei die Parameter (101, 102) in Abhängigkeit von Werten eines Motorgebers bestimmt werden.

11. Verfahren nach einem der vorstehenden Ansprüche, wobei die Parameter (101, 102) in Abhängigkeit von Werten eines Maschinengebers oder direkten Gebers bestimmt werden.

12. Antriebsintegrierte Steuerung (100) eines Servo-Antriebs, aufweisend eine Lageregelung (110) für den Servo-Antrieb sowie aufweisend eine Optimierungseinheit (103), wobei die Optimierungseinheit (103) zum Bestimmen von Parametern (101, 102) der Lageregelung (110) in Abhängigkeit von Antriebsgrößen ausgebildet ist.

13. Antriebsintegrierte Steuerung (100) nach Anspruch 12, ferner aufweisend eine Ausgabeeinheit zur Ausgabe eines Statusparameters, wobei der Statusparameter zum Anzeigen eines erforderlichen erneuten Bestimmens zumindest eines Parameters oder zum Anzeigen zumindest eines ermittelten und/ oder gültigen Parameters ausgebildet ist.

14. Antriebsintegrierte Steuerung (100) nach Anspruch 12 oder 13, ferner aufweisend eine Kommunikationsschnittstelle zu einem übergeordneten Steuerungssystem (200) oder einem Engineering-System.
